# EUROPÄISCHE PATENTANMELDUNG

(11) **EP 1 241 086 A2**
(43) Veröffentlichungstag der Anmeldung: **18.09.2002**
(21) Anmeldenummer: 02002499.8
(22) Anmeldetag: 02.02.2002
(51) Int. Cl.: B62H 1/02

(54) **Zweibeinstütze für ein Zweirad**

(30) Priorität: 16.03.2001 DE 10112655
(71) Anmelder: Bayerische Motoren Werke Aktiengesellschaft, 80809 München (DE)
(72) Erfinder: Berkmann, Franz, 80935 München (DE)

(57) **Zusammenfassung**

Es wird eine Zweibeinstütze für ein Zweirad vorgeschlagen, die um eine in Fahrzeugquerrichtung verlaufende Achse schwenkbar am Zweirad angebracht ist und zu ihrer Betätigung mittels eines Fußhebels um diese Schwenkachse von einer ersten Endposition für Fahrbetrieb in eine zweite Endposition zum Abstellen des Zweirads verschwenkt werden kann. Dabei berührt die Zweibeinstütze beim Verschwenken zum Abstellen des Zweirads in einer Zwischenposition mit ihren beiden Füßen den Boden und ab dieser Zwischenposition verschwenkt das Zweirad und die Achse der Zweibeinstütze um eine weitere Schwenkachse, die Verbindungslinie der beiden Bodenberührpunkte der Füße, bis die Zweibeinstütze ihre zweite Endposition erreicht. Die Zweibeinstütze zeichnet sich dadurch aus, dass einer der beiden Füße der Zweibeinstütze in Längsrichtung des Zweirads gesehen weiter nach vorne ragt als der andere.

## Beschreibung

Die Erfindung betrifft eine Zweibeinstütze für ein Zweirad nach dem Oberbegriff des Hauptanspruchs.

Es sind bereits Zweiradstützen bekannt, die als Zweibeinstützen oder Kippständer bezeichnet werden. Ein Kippständer ist gewöhnlich als zweiarmiger Lagerbock ausgebildet, der um eine Fahrzeugquerachse schwenkbar am Zweirad angebracht ist und dieses in aufrechter Lage abstützt, indem ein Rad vom Boden hochgehoben wird.

Zur besseren Handhabbarkeit sind Kippständer teilweise mit Fußhebeln versehen, die sowohl die Erreichbarkeit des Kippständers für den Fahrer verbessern, als auch, durch Hebelwirkung, Bildung eines günstigen Kraftangriffspunktes usw., die vom Fahrer aufzuwendende Kraft zum Aufstellen des Zweirads verringern. Die deutsche Patentschrift 535 592 beschreibt einen Kippständer für Motorräder, mit vom Fahrersitz aus erreichbarem Fußhebel, der so angebracht ist, dass er bei hochgestelltem Rad mit seinem freien Ende auf der Fahrbahn aufliegt.

Der Fußhebel begünstigt das Aufstellen des Zweirads dadurch, dass er an seinem freien Ende mit dem gesamten Körpergewicht belastet werden kann, was am Aufstandspunkt des Kippständers am Boden ein Drehmoment um den Aufstandspunkt erzeugt, das das Zweirad hochhebt, eventuell unterstützt durch eine aufwärtsgerichtete Zugkraft des Fahrers am Zweirad.

Belastet der Fahrer den Kippständer durch sein Körpergewicht, kann er weitere Kraft nur begrenzt aufbringen, um das Zweirad in der Vertikalen zu halten, damit es nicht umfällt. Deshalb ist beim Aufbringen des Drehmoments auf den Fußhebel vom Fahrer unbedingt darauf zu achten, dass das Zweirad möglichst wenig in Schräglage kommt. Bei vorhandenen Bodenunebenheiten oder einer Fahrbahnneigung ist dies besonders bei beladenem Fahrzeug nicht immer möglich, wobei sich eine zum Fahrer hin gerichtete Schräglage des Zweirads zur Stabilisierung während des Abstellens auf den Kippständer eher günstig auswirkt, während eine vom Fahrer weg gerichtete Schräglage des Zweirads leicht zum Umkippen führen kann. Insbesondere leichtgewichtigen Personen ist es schon ab einer relativ geringen Neigung in dieser Richtung nicht mehr möglich, das Zweirad zurück in die Vertikale zu bringen. Dies gilt nicht nur für das Aufstellen des Zweirads auf den Kippständer, sondern auch für das sogenannte Abbocken vom Kippständer zur Herstellung der Fahrbereitschaft.

Deshalb ist es Aufgabe der Erfindung, einen Kippständer für ein Zweirad bereitzustellen, der es dem Fahrer erleichtert, sowohl beim Aufstellen als auch beim Abbocken des Zweirads auf den und vom Kippständer, ein Umkippen des Zweirads bei ungünstigen Verhältnissen zu verhindern.

Die Aufgabe wird erfindungsgemäß mit dem kennzeichnenden Merkmal des Anspruchs 1 gelöst. Eine weitere Ausgestaltung der Erfindung ergibt sich aus dem Unteranspruch.

Nach der Erfindung ist ein Kippständer für ein Zweirad, der um eine in Fahrzeugquerrichtung verlaufende Achse schwenkbar am Zweirad angebracht ist und zu seiner Betätigung mittels eines Fußhebels um diese Schwenkachse von einer ersten Endposition für Fahrbetrieb in eine zweite Endposition zum Abstellen des Zweirads verschwenkt werden kann, wobei der Kippständer beim Verschwenken zum Abstellen des Zweirads in einer Zwischenposition mit seinen beiden Füßen den Boden berührt und in dieser Zwischenposition das Zweirad und die Achse des Kippständers um eine weitere Schwenkachse, die die beiden Bodenberührpunkte der Füße verbindet, verschwenkt werden, bis der Kippständer seine zweite Endposition erreicht hat, dadurch gekennzeichnet, dass einer der beiden Füße des Kippständers, in Längsrichtung des Zweirads gesehen, weiter nach vorne ragt als der andere.

Das hat den Vorteil, dass beim Aufstellen und Abbocken des Zweirads dieses um einen bestimmten Winkelbereich zu einer Seite geschwenkt wird, wobei durch eine zum Fahrer hin gerichtete leichte Schräglage des Zweirads eine für diesen günstige Kraftangriffsposition geschaffen wird, die zur einfachen Handhabung bei der Stabilisierung des Zweirads während des Aufstellens auf den und des Abbockens vom Kippständer beiträgt.

Bei einer vorteilhaften Ausführung der Erfindung ragt der rechte Fuß weiter nach vorne. Das hat den Vorteil, dass das Zweirad beim Aufstellen und Abbocken um einen bestimmten Winkelbereich nach links zur Seite geschwenkt wird. Nachdem ein Fahrer gewöhnlich von der linken Seite aus auf das Motorrad auf- und absteigt und von dort aus auch den Kippständer bedient, ist eine leichte Schräglage des Zweirads nach links günstig für eine Kraftangriffsposition des Fahrers, durch die ein Umkippen des Zweirads leicht vermieden werden kann.

Ein bevorzugtes Ausführungsbeispiel der Erfindung ist in der nachfolgenden Beschreibung und der zugehörigen schematischen Zeichnung näher dargestellt. Es zeigen:
- Figur 1: einen Kippständer eines Zweirads gemäß dem Stand der Technik, schematisch gezeichnet in Seitenansicht und
- Figur 2: einen Kippständer für ein Zweirad gemäß der Erfindung in räumlicher Darstellung.

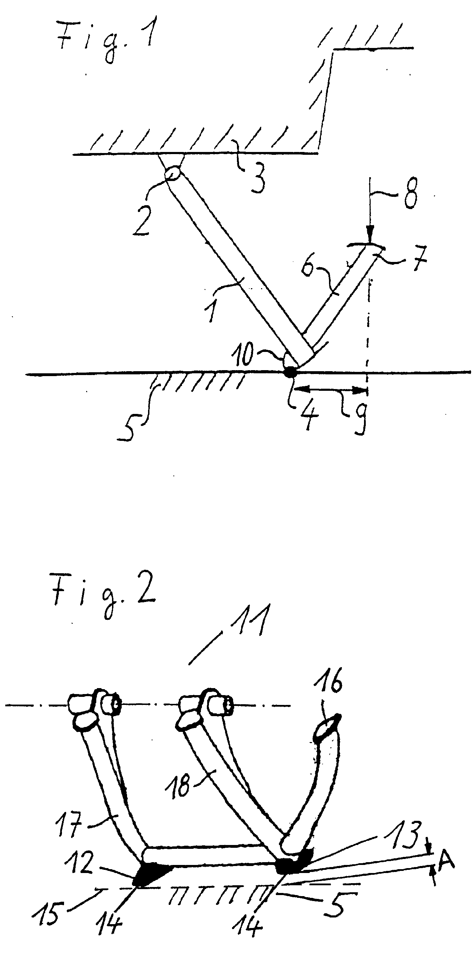

Nach **Figur 1** ist ein Kippständer 1 entsprechend dem Stand der Technik um eine Fahrzeugquerachse 2 schwenkbar an einem schematisch gezeichneten Zweiradrahmen 3 gelagert. Der Kippständer 1 ist zwischen zwei Endstellungen hin- und herschwenkbar, nämlich einer Endstellung für Fahrbetrieb, im eingeklappten Zustand und einer Endstellung zum Abstellen des Zweirads, dem ausgeklappten Zustand. Gezeichnet ist der Kippständer 1 in einer Zwischenstellung, zwischen den beiden Endstellungen, der Stellung, bei der der Kippständer 1 mit beiden Füßen 10 in Aufstellpunkten 4 den Boden 5 berührt und durch weitere Kraftaufbringung das Zweirad auf den Kippständer 1 gehoben werden würde. Durch die gezeichnete Stellung des Kippständers 1 wird genau der Moment dargestellt, in dem eine Drehpunktänderung stattfindet, von der Drehung um die Fahrzeugquerachse 2 zur Drehung um den Aufstellpunkt 4.

Der Kippständer 1 besitzt zu seiner Handhabung einen fest mit ihm verbundenen Fußhebel 6, dessen freies Ende 7 zum Aufstellen des Zweirads durch einen Fuß des Zweiradfahrers mit dessen Körpergewicht belastet werden kann. Befindet sich der Kippständer 1 im eingeklappten Zustand, setzt der Zweiradfahrer dazu seinen Fuß auf das freie Ende 7 des Fußhebels 6 und dreht den Kippständer 1 damit um die Fahrzeugquerachse 2 in die gezeichnete Stellung, in der der Kippständer 1 mit beiden Füßen 10 in den Aufstellpunkten 4 den Boden 5 berührt. Durch weitere Belastung, zum Beispiel durch das ganze Körpergewicht des Zweiradfahrers, symbolisch gezeichnet durch den Kraftpfeil 8, dreht sich jetzt der Kippständer 1 um eine weitere Schwenkachse, die Verbindungslinie der Aufstellpunkte 4, wobei um diese durch das Körpergewicht ein Drehmoment erzeugt wird, das mit einem Hebelarm wirkt, der durch den Doppelpfeil 9 dargestellt ist. Dieses Drehmoment verschwenkt den Kippständer 1 um die weitere Schwenkachse unter Anhebung des Zweiradrahmens 3 in Uhrzeigerrichtung so weit, bis das freie Ende 7 des Fußhebels 6 ebenfalls den Boden 5 berührt oder bis eine hier nicht gezeichnete Anschlagfläche am Zweirad mit dem Kippständer 1 zur Anlage kommt. Während dieses zweiten Teils des Aufstellvorgangs kann unter Umständen durch eine vom Fahrer auf das Zweirad aufgebrachte unterstützende Aufstellkraft nach oben das Zweiradgewicht entlastet und dadurch die Gewichtskraft des Fahrers auf das freie Ende 7 erhöht werden, was wiederum das Drehmoment vergrößert.

Beim Abstellen des Zweirads auf oder von diesem Kippständer 1 gemäß dem Stand der Technik, bewegt sich dieses im günstigsten Fall in einer Ebene, die senkrecht auf der Aufstellfläche, dem Boden 5, steht. Bei vorhandenen Bodenunebenheiten oder einer Fahrbahnneigung ist dies nicht immer möglich, wobei eine vom Fahrer weg gerichtete Schräglage des Zweirads leicht zum Umkippen führen kann. Insbesondere leichtgewichtigen Personen ist es schon ab einer relativ geringen Neigung in dieser Richtung nicht mehr möglich, das Zweirad zurück in die Vertikale zu bringen.

Ein Kippständer 11, gemäß der Erfindung, wie in **Figur 2** räumlich dargestellt, verhindert dies. Der Kippständer 11 entspricht im wesentlichen dem aus **Figur 1,** mit dem Unterschied, dass der rechte Fuß 12 des Kippständers 11 in Längsrichtung des Zweirads gesehen weiter nach vorne ragt als der linke Fuß 13. Diese Unsymmetrie der Füße 12,13 des Kippständers 11 führt dazu, dass der rechte Fuß 12 bereits mit seiner Spitze den Boden 5 berührt, während zwischen der Spitze des linken Fußes 13 und dem Boden 5 noch ein Abstand A besteht. Wird nun die Kraft auf den Fußhebel 16 erhöht, neigt sich das Zweirad aus der senkrecht auf dem Boden 5 stehenden Ebene heraus, zum auf der linken Seite des Zweirads stehenden, nicht gezeichneten, Fahrer hin. Und zwar so lange, bis auch die Spitze des linken Fußes 13 den Boden 5 berührt. Erst dann dreht sich der Kippständer 11 um die weitere Schwenkachse, die gestrichelt gezeichnete Verbindungslinie 15 der beiden Bodenberührpunkte 14, in Uhrzeigerrichtung unter Anhebung des nicht gezeichneten Zweiradrahmens. Und zwar so weit, bis das freie Ende 17 des Fußhebels 16 ebenfalls den Boden 5 berührt oder bis eine hier nicht gezeichnete Anschlagfläche am Zweirad mit dem Kippständer 11 zur Anlage kommt. Während dieses zweiten Teils des Aufstellvorgangs schwenkt das Zweirad wieder kontinuierlich in die Ebene, die senkrecht auf dem Boden 5 steht zurück, da entsprechend dem Stand der Technik beide Stützen 17,18 gleich lang sind.

Eine zum Fahrer hin gerichtete Schräglage des Zweirads wirkt sich günstig auf die Kippsicherheit sowohl beim Aufstellen des Zweirads auf den Kippständer 11, als auch für das sogenannte Abbocken vom Kippständer 11 zur Herstellung der Fahrbereitschaft aus, da der Fahrer bei auftretenden Unregelmäßigkeiten zur Wiederherstellung einer stabilen Gleichgewichtslage einfach sein Körpergewicht einsetzen kann, indem er sich gegen das geneigte Zweirad lehnt.

## Patentansprüche

1. Zweibeinstütze für ein Zweirad, die um eine in Fahrzeugquerrichtung verlaufende Achse schwenkbar am Zweirad angebracht ist und zu ihrer Betätigung mittels eines Fußhebels (16) um diese Schwenkachse von einer ersten Endposition für Fahrbetrieb in eine zweite Endposition zum Abstellen des Zweirads verschwenkt werden kann, wobei die Zweibeinstütze beim Verschwenken zum Abstellen des Zweirads in einer Zwischenposition mit ihren beiden Füßen (12,13) den Boden berührt und ab dieser Zwischenposition das Zweirad und die Achse der Zweibeinstütze um eine weitere Schwenkachse, die Verbindungslinie (15) der beiden Bodenberührpunkte (14) der Füße (12,13), verschwenkt wird bis die Zweibeinstütze ihre zweite Endposition erreicht, **dadurch gekennzeichnet, dass** einer der beiden Füße (12,13) der Zweibeinstütze in Längsrichtung des Zweirads gesehen weiter nach vorne ragt als der andere.

2. Zweibeinstütze nach Anspruch 1, **dadurch gekennzeichnet, dass** der rechte Fuß (12) weiter nach vorne ragt.
